# EUROPEAN PATENT SPECIFICATION

(11) **EP 3 386 877 B1**
(45) Date of publication and mention of the grant of the patent: **10.07.2019**
(21) Application number: 16815908.5
(22) Date of filing: 05.12.2016
(51) Int. Cl.: B65D 8/02, B29C 49/20, B29C 49/42, B29C 49/48, B29L 31/00, B29C 49/04, B29C 49/24

(54) **CONTAINER**
BEHÄLTER
CONTENEUR

(30) Priority: 07.12.2015 GB 201521509
(43) Date of publication of application: 17.10.2018
(73) Proprietor: Plastic Keg Co. Limited, Chorley, Lancashire PR7 1HP (GB)
(72) Inventor: KELLY, Jim, Chorley Lancashire PR7 1HP (GB)
(74) Representative: Hutchinson, Thomas Owen
(86) International application number: PCT/GB2016/053818
(87) International publication number: WO 2017/098219

(56) References cited:
- EP-A1- 2 281 753
- EP-A2- 0 934 815
- JP-A- H08 303 693
- US-A- 4 589 563
- US-A- 4 664 958

## Description

This invention relates to containers, and in particular, but without limitation, to containers suitable for use as beer kegs.

Kegs are ubiquitous in the brewing industry and are used to transport quantities of beer from the brewery to retail establishments, such as pubs, bars and restaurants. The beer is stored in the keg under pressure, and so the keg needs to be able to withstand the internal hydrostatic pressure, as well as being sufficiently strong and durable to withstand the rough handling that occurs in the brewery (where kegs are rolled, dropped and bumped around as they move along a filling line, for example) and during transport (where kegs are often dropped off the back of delivery lorries and/or into basements from street level, for example). It is therefore imperative that a beer keg is able to safely contain its pressurised gas and/or liquid contents, even when subjected to repeated impacts, vibration and shaking.

A further requirement of beer kegs is their ability to be re-used. In order to meet this objective, they must be sufficiently robust and durable to withstand repeated filling, transportation, storage and emptying cycles. Beer kegs, due to the nature of their contents (normally beer), need to be sterilisable (usually by using pressurised steam injected into the interior of the keg on the filling line). A further requirement of a beer keg is its resistance to absorbing, or adsorbing on its interior surfaces, contaminants that may taint or spoil the contents.

Traditionally, therefore, beer kegs comprise a stainless steel pressure vessel with an inlet/outlet aperture through which it can be filled, cleaned and emptied. The inlet/outlet aperture generally comprises an internal screw thread for screw-threading receiving a corresponding external screw thread of a "spear", which spear is generally brewery-specific (i.e. each brewery uses its own type of spear to prevent their kegs from being used by other breweries, or vice-versa). The spear comprises a screw-threaded boss that engages with the inlet/outlet aperture of the keg, and which comprises a tube that extends into the interior of the keg's pressure vessel. The function and construction of keg spears is largely outside the scope of this disclosure, other than to note that it sealingly engages with the keg via a screw-threaded connection.

The vast majority of beer kegs also comprise circumferential ribs extending around the main body of the pressure vessel, which facilitate rolling the keg over a floor or ground surface. A base ring is also usually provided, which is typically welded to the base of the pressure vessel, to stabilise it when the keg is stood upright. An upper ring is also usually provided, surrounding the inlet/outlet aperture of the keg, to facilitate manual handling (i.e. comprising handle portions) and to protect the inlet/outlet aperture and the external part of the spear.

A stainless steel keg will also usually comprise a pressure-relief safety valve. This is usually formed as a line of weakness on the base of the pressure vessel so that in the event of an internal over-pressure, the line of weakness breaks preferentially, thereby discharging the keg's contents out through the base (i.e. away from bystanders) in a relatively controlled manner.

Metal, and in particular, stainless steel kegs suffer from a number of well-known drawbacks, including: the considerable weight of metal kegs can be problematic from both a manual handling, and a cost-of-transportation, perspective; and the high cost of metal kegs and their high "scrap metal" value, which makes them very susceptible to theft.

In an attempt to address one or more of the above problems, it has been proposed to manufacture beer kegs out of high-impact polymers, typically polyethylene and polypropylene, which are thermoplastic materials that can be readily injection- or blow-moulded.

Examples of known containers are described in US4589536A [BORN, 20 May 1986]; and in EP0934815A2 [JMK INT INC, 11 August 1999].

However, when manufacturing the pressure vessel of a plastic beer keg from thermoplastic materials, it is not possible to form the internal screw threading of the inlet/outlet aperture to a sufficiently high tolerance to reliably accept a spear. On solution is to blow-mould the pressure vessel with a "blank" inlet/outlet aperture, which can be tapped subsequently to produce the requisite internal thread, but due to the nature of the polymer from which the pressure vessel is manufactured, the threads tend to break when the vessel is pressurised, potentially leading to catastrophic failure. Put simply, plastic kegs manufactured to mimic metal kegs, have been found to be unsuitable in actual use.

In order to overcome the de-threading problem outlined above, it has also been proposed to provide re-manufactured kegs, which comprise a plastics outer shell that is adapted to receive a disposable plastic film liner to which a screw-threaded inlet/outlet aperture is bonded. In these types of plastic keg, the outer shell provides the requisite durability and impact resistance, and effectively contains the liner, which expands upon filling to bear against the inner walls of the outer casing. After each use, the keg is stripped down by removing the liner, and a replacement liner is fitted prior to refilling. However, these known kegs produce waste (i.e. the discarded liners) during each fill cycle, and it is also necessary to recover and re-fit the spears during each fill cycle, which tends to be a labour-intensive procedure.

A need therefore exists for a solution to one or more of the above problems and/or an alternative to kegs that are currently available.

Various aspects of the invention are set forth in the appended independent claims. Optional or preferred features of the invention are set forth in the appended dependent claims.

By providing an insert manufactured from a different material to that of the pressure vessel, it is possible to manufacture the pressure vessel from a relatively inexpensive, high-impact polymer, such as polyethylene or polypropylene (thus meeting the mechanical requirements of the pressure vessel) whilst at the same time being able to manufacture the insert from a different material (such as ABS) that is more suited to forming a thread for screw-threading receiving, in use, a connector, such as a spear.

In other words, the invention provides somewhat of a hybrid container falling somewhere between a completely moulded plastics container (which is unsuitable for subsequent attachment of a spear) and a (high cost) metal keg with its precision neck. By making the container from several components, which are sealingly united, or fused, together during the manufacturing process, the invention suitably provides the best of both worlds, that is to say: a low-cost container and a precision neck to which a spear can be affixed.

A further possible advantage of the invention is one of rationalisation, by which a manufacturer could have one tool for making the pressure vessel, and a stock of different inserts that can be fitted to the containers to suit different customer's needs. This advantageously obviates the need for a separate tool for the pressure vessels for each customer.

Suitably, the pressure vessel is manufactured via a blow-moulding process, which process is particularly suited to the manufacture or relatively large, hollow plastics components. Suitably, the pressure vessel is manufactured from polypropylene, nylon or other recyclable or reprocessable polymer material which meet one or more of the aforementioned requirements of the pressure vessel, which in particular include some degree of shock and shatter resistance.

The insert is manufactured from a plastics material, being most preferably of much higher density (and thus structural strength and rigidity) than the material from which the pressure vessel is manufactured, and in which a screw thread can be formed, either as part of the moulding process or thereafter by tapping or other screw thread formation process. The insert is manufactured from a plastics material that is compatible with the plastics of the pressure vessel so that the two can be sealingly united.

Suitably, the insert is manufactured from a material such as high-density polyethylene (HDPE), an acetal-based polymer with glass bead or glass fibre reinforcement, or a high strength glass-filled nylon material, such meeting one or more of the above requirements, in particular by being structurally much stronger and more rigid (still elastic but much less so) than the material of which the pressure vessel is constituted. Alternatively, an example is the HDPE known as "Hostalen^{RTM} ACP 6541A UV" available from LyondellBasell^{RTM} Industries NV.

Suitably, the insert is generally tubular and may comprise a flange portion. The flange portion, where provided, suitably provides a region of increased surface area for sealingly uniting the insert to the pressure vessel. In preferred embodiments of the invention, the flange is receivable in a corresponding annular recess surrounding the periphery of the pressure vessel's inlet/outlet aperture. Such a configuration suitably aligns and/or temporarily retains and/or forms a mechanical connection (e.g. an interference fit) between the insert and the pressure vessel. In certain embodiments, particularly when the pressure is blow-moulded in-situ around the insert, said interference fit will arise naturally as a result of the contraction of the polymer of the pressure vessel as it cools after the blow-moulding process.

The flange, where provided, is suitably located at least partially within the hollow interior of the pressure vessel to resist outward movement or subsequent removal of the insert.

The pressure vessel is sealingly united with the insert, wherein the insert and pressure vessel are manufactured from similar and/or compatible materials and are fused together during the manufacturing process to form the requisite seal. In certain embodiments (e.g. when the pressure vessel is being blow-moulded around the insert) the polymer material of the pressure vessel is plastically deformed while at elevated temperature. As the plastic comes into contact with the relevant surface of the insert, it can cause the material of the insert to soften to some degree, and thus the materials of the respective components may meld together in the region of their interface. Such a physical (or indeed possibly chemical, should the interaction between the materials in the region of their interface be chemical in nature) bond between the respective components would significantly reduce the likelihood that the insert might detach itself from the pressure vessel and start to rotatingly slip relative to the pressure vessel when an operative attempts to screw a spear into the threaded aperture of the insert, particularly as the spear is tightened therein.

Additionally the insert may be forcibly welded to the pressure vessel, for example, using ultrasonic welding. Additionally a bead or film of solvent and/or adhesive may be applied to the insert and/or the periphery of the inlet/outlet aperture during the manufacturing process such that the two become sealingly bonded together.

The insert comprises a neck around the exterior surface of which, said neck exterior surface being that surface with which a periphery of the inlet/outlet aperture of the pressure vessel is sealingly united, are provided one or more rotationally (and optionally circumferentially or radially) asymmetric formations which mechanically interact with the aperture periphery of the pressure vessel to prevent the insert from disengaging with, and rotating relative to the pressure vessel aperture in which it is disposed. Various different formations are possible, but one particularly useful formation is a continuous bead in which a plurality of recessed flats are machined, formed or otherwise provided. An alternative (and equivalent) formation would be a discontinuous bead. Regardless of the particular shape of the formation(s), their purpose is the same - to completely prevent (except in the event of catastrophic failure) the insert from rotationally slipping within and relative to the pressure vessel aperture in which it is seated.

For instance, In the case where the pressure vessel is blow-moulded such that the polymer thereof is plastically deformed onto, around, and within said formation(s), and then sets in place, the insert is completely secured within the pressure vessel aperture, both axially (by the radial flanges provided above and below the neck of the insert and between which a corresponding neck of the pressure vessel is formed and thus disposed), and also rotationally (by virtue of the said formation(s) being essentially embedded within said neck of the pressure vessel). For the avoidance of doubt, it should be mentioned that the asymmetry of the formations should be such that there is at least some difference in shape, depth, or width of the formation provided at one circumferential position around the neck as compared to the formation provided at one, or any other circumferential position.

Suitably, the container comprises an outer casing. The outer casing, where provided, may serve, in use, to protect the pressure vessel. The outer casing may comprise circumferential ribs extending around it to facilitate, in use, rolling the container over a floor or ground surface. The outer casing may further comprise a base portion adapted, in use, to stabilise the container when it is stood upright. The outer casing may further comprise upper portion adapted, in use, to facilitate manual handling of the container, and/or to protect the inlet/outlet aperture and the external part of an attached spear. The upper portion may additionally comprise handle portions.

Suitably, the outer casing, where provided, comprises three parts, namely a base portion, a waistband portion and an upper portion. The aforementioned three casing portions are suitably united by clip fittings and/or by ultrasonic welding and/or by an adhesive. By making the outer casing in three parts, a further possible advantage of rationalisation may flow from the invention, by which a manufacturer could use the same base and/or upper portions on every container, but vary the waistband portion to suit different customer's needs, for example, by providing customer-specific colours, branding, embossing, debossing etc.

The container of the invention may also comprise a pressure-relief safety valve.

Suitably, the thermoforming process comprises a blow moulding process. The method may further comprise the step of forming an internal screw thread on an interior surface of the tubular insert. The method may further comprise the step of applying a bead or film of solvent or adhesive to the insert and/or to the periphery of the pressure vessel's inlet/outlet aperture. The method may further comprise the step of welding, for example ultrasonically welding, the insert to the periphery of the pressure vessel's inlet/outlet aperture.

The method may further comprise the step of forming, and affixing, an outer casing around, the pressure vessel. Suitably, the outer casing is formed in two or more parts that can be placed around the pressure vessel and joined or united subsequently, for example, by clip-fitting together and/or using an adhesive and/or using ultrasonic welding.

Preferred embodiments of the invention shall now be described, by way of example only, with reference to the accompanying drawings in which:
Figure 1 is a perspective view of a container in accordance with the invention;
Figure 2 is a cross-section of Figure 1 on II;
Figure 3 is an exploded, perspective, cross-sectional view of Figure 1 on II;
Figure 4 is a close-up view of Figure 2 on the sharing the detail of the join;
Figure 5 is a close-up perspective, cross-sectional view of the inlet/outlet aperture of the container of Figure 1 with insert in place;
Figures 5A, 5B show close-up views of an alternative embodiment of the insert shown in section in Figure 5,
Figure 6 is an exploded, schematic cross-sectional view of a pressure relief valve in accordance with aspect of the invention;
Figure 7 is a cross-sectional view of the pressure relief valve of Figure 6 in an un-ruptured state;
Figure 8 is a cross-sectional view of the pressure relief valve of Figure 6 in a ruptured state;
Figure 9 is a cross-sectioned perspective view of an embodiment of a pressure relief valve according to the invention; and
Figure 10 is a cross-sectioned perspective view of another embodiment of a pressure relief valve according to the invention.

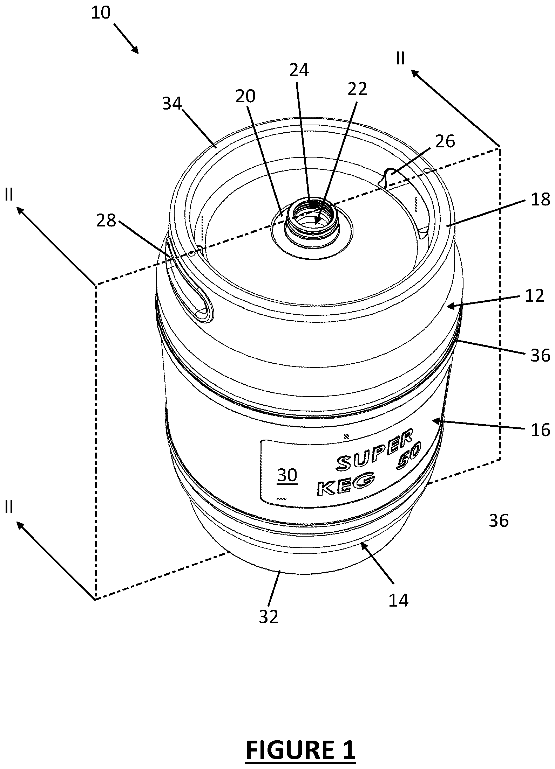

In Figure 1 of the drawings, a container 10 in accordance with the invention comprises an outer casing 12 formed from a lower base part 14, a generally tubular central waistband portion 16 and an upper casing portion 18. The casing 12 encases a plastics pressure vessel 20 having an inlet/outlet aperture 22 through which the container 10 can be filled and emptied in use. The inlet/outlet aperture 22 is fitted with a generally tubular insert 24 manufactured from a different plastic material to that of the pressure vessel 20.

The upper casing portion 18 comprises a pair of diametrically opposed cut-outs forming handles 26 into which have been inserted clip-fitting, slidably receivable grip portions 28. The waistband portion 16 of the outer casing 12 also comprises a display portion 30 onto which indicia (such as advertising or branding) can be printed, embossed or debossed, as required.

It will be noted from Figure 1 that the base portion 14 of the outer casing 12 has a lower peripheral edge 32 that forms a stable base to support the container 10 when it is stood upright, as shown. Likewise, the upper casing portion 18 also comprises a generally flat rim 34 that enables the container 10 stably stood when inverted also, although it will be appreciated that the container 10 is not generally stored upside down.

The central waistband portion 16 of the outer casing 12 comprises a pair of circumferential ridges 36 which facilitate rolling the container 10 when it is laid on its side.

The pressure vessel 20 and the outer casing, handles 28 and the insert 24 are all manufactured from plastics materials, which makes the container 10 considerably lighter than a stainless steel equivalent.

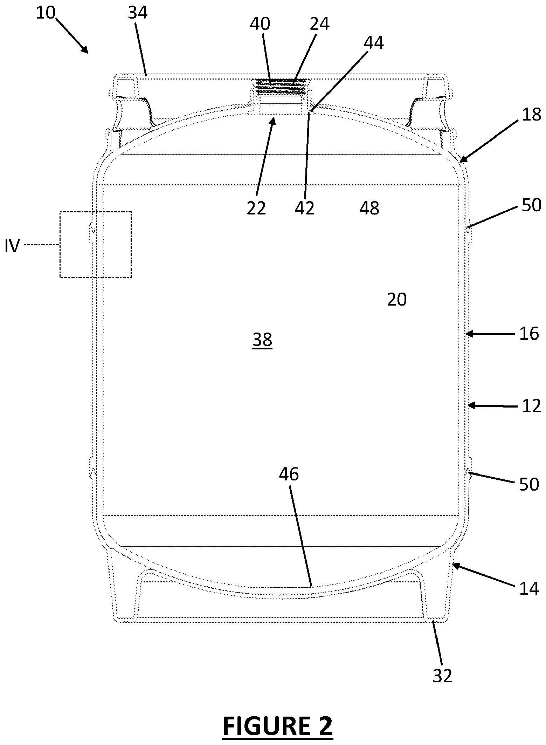

Turning now to Figure 2, which is a cross-section of Figure 1 on II, it can be seen that the pressure vessel 20 fits snugly inside the outer casing 12 and that the interior profile of the casing 12 substantially corresponds to the outer profile of the pressure vessel 20. It should be noted, however, that the cross-section of Figure 2 shows the container 10 after having undergone a number of filling/emptying cycles. Initially, the pressure vessel 20 is made slightly smaller than the outer casing 12 and this is deliberately so to accommodate the expansion and "permanent set" that occurs when the pressure vessel, being manufactured from plastics, is first steam cleaned internally. It will be apparent to those skilled in the art that the interior of a beer keg, for example, is cleaned between uses using high-pressure, superheated steam. However, as the pressure vessel 20 is manufactured from plastics, there will be a tendency for it to expand slightly the first time this occurs, which introduced a slight increase in size, which expansion becomes "permanently set" into the plastic, i.e. the expansion does not re-contract with subsequent use of the container 10.

It will be seen from Figure 2 that the pressure vessel 20 has a hollow interior volume 38, which is suitable for retaining a quantity of liquid, such as beer (not shown), in use. The hollow interior volume 38 of the pressure vessel 20 can be filled or emptied via the inlet/outlet aperture 22 at its upper end.

The insert 24 is formed as a generally tubular plastics component, which comprises an internal thread 40 around its upper periphery, which is designed to engage with a complementary external screw thread of a dispensing spear (not shown). The lower end of the insert 24 terminates in an outwardly radially projecting flange 42, which seats in a correspondingly shaped recess 44 surrounding the periphery of the inlet/outlet aperture 22 of the pressure vessel 20.

The inlet/outlet aperture's periphery and the flange portion 44 of the insert 24 are fused together during the manufacturing process of the pressure vessel 20. Specifically, the pressure vessel 20 is blow moulded from a tube of softened plastics material (the blank), which is lowered into a mould. A first crimping device (not shown) clamps around the outside of the softened blank to pinch the bottom part 46 of the pressure vessel 22 together during the moulding process. The insert 24 is pre-located inside the mould and a second crimping device (not shown) draws the upper parts 48 of the softened blank together around the outside of the insert 24 during the moulding process. Then, pressurised air or gas is blown into the interior volume 38 formed by the softened blank to form the shape of the pressure vessel 20 by outward expansion onto the interior form of the mould. Because the blank for the pressure vessel 20 is in a softened state during this procedure, it is able to form an intimate joint with the outside surface and/or flange 42 of the insert 24. Furthermore, because the blank is in a semi-solid-state during the moulding process, it is able to fuse and sealingly bond to the flange portion 42 of the insert 24 during the moulding process.

It will be appreciated this manufacturing technique forms a unitary structure comprising the shaped pressure vessel 20 and the now integrally formed insert 24.

The pressure vessel 20 is typically manufactured from a thermoplastic material such as polyethylene or polypropylene, whereas the insert 24 is typically manufactured from a harder, machinable material, such as ABS. Therefore, the pressure vessel provides a tough, durable and waterproof enclosure for the contents of the container 10 in use, whereas the insert 24 provides a much harder component, which can be accurately machined, moulded or threaded to receive a dispensing spear (not shown), in use.

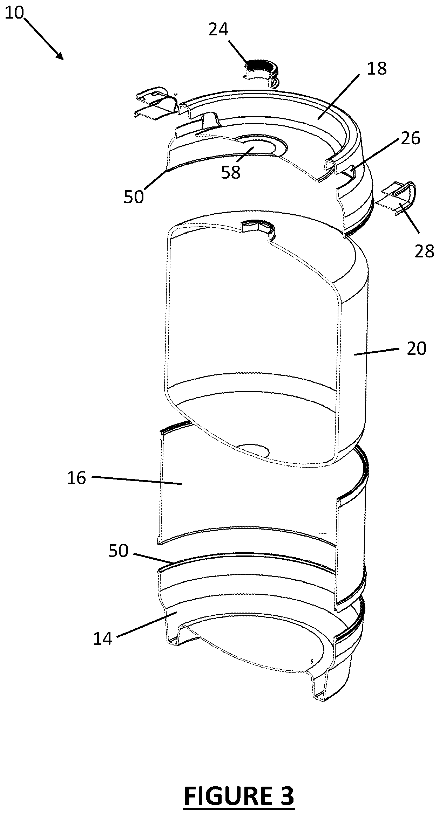

It can be seen from Figures 2 and 3 in particular, that the outer casing 12 of the container 10 comprises a lower base portion 14, a central waistband portion 16 and an upper portion 18 which are united by complimentary push-fit connections 50 that extend around their upper and/or lower peripheral edges 50.

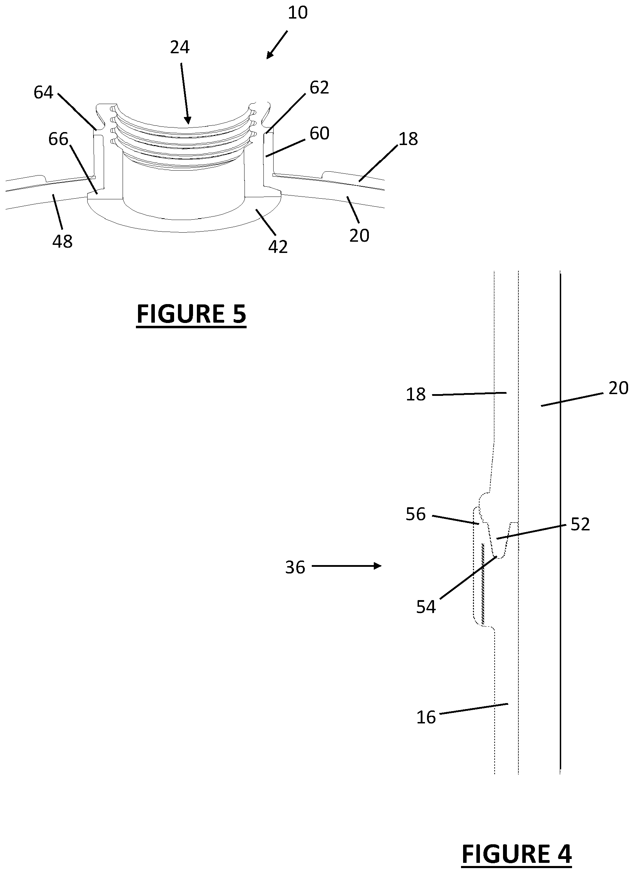

Figure 4 of the drawings is a close-up view of Figure 2 on IV and shows how the upper casing portion 18 comprises a lower peripheral edge comprising a circumferential lip 52 that seats within a corresponding circumferential channel 54 disposed on the upper edge of the waistband portion 16 or vice versa. The upper peripheral edge of the waistband portion 16 terminates in a radially outwardly located lip portion 56, which overlaps slightly lower peripheral edge of the upper portion 18 of the casing 12. The overlapping portion 56 is shaped and configured for optimal ultrasonic welding of the two parts 16, 18 Therefore, there is both a mechanical interconnection between the upper casing portion 18 and the waistband portion 16 as well as an ultrasonic weld fusing the two together. This results in a strong, durable interconnection which should last the lifetime of the container 10. Alternatively, the lip may comprise a clip formation adapted to positively engage a corresponding formation of the circumferential channel. The same is also true of the lower casing portion 14 and the waistband portion 16 of the outer casing.

Suitably, the upper, lower and waistband portions comprise a radially outwardly disposed lip portion, which overlaps the join line between the lower portion and the waistband portions; and the upper portion and the waistband portion.

Conveniently also, the overlapping portions 56 form the radially outwardly projecting ribs 36 previously mentioned, to facilitate rolling the container 10 across a floor or ground surface.

Turning back to Figures 2 and 3 of the drawings, it can be seen how the handle inserts 28 simply clip into corresponding cut-outs 26 in the upper casing portion 18 and how the upper casing portion 18 comprises a central through-hole 58 that surrounds the neck of the pressure vessel 20.

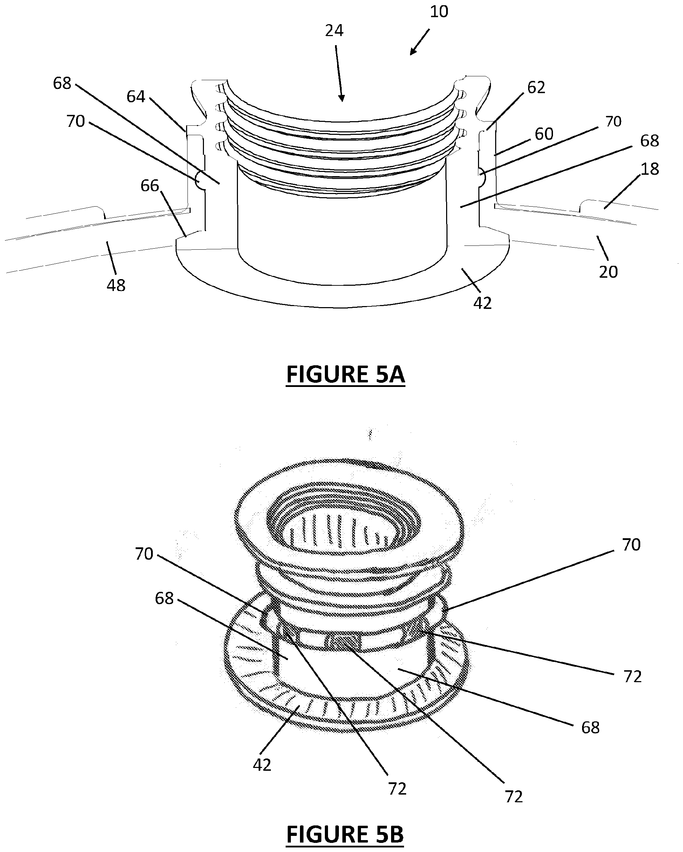

Turning now to Figure 5 of the drawings, which is a close-up view showing the connection between the insert 24 and the inlet/outlet aperture of the pressure vessel 20, it can be seen that during the manufacturing process, the upper part 48 of the pressure vessel 20 is crimped to form a neck portion 60 that folds up around the sidewall of the insert 24. The upper peripheral edge 62 of the neck 60 abuts a small radially projecting flanged portion 64 of the insert and thus forms a neat termination to the neck 60 of the pressure vessel 20.

It can also be seen in Figure 5 of the drawings how the lower peripheral flange 42 of the insert 24 is slightly wider than the neck 60 of the pressure vessel 20 thereby inhibiting removal or outward displacement of the insert post-manufacture.

It can also be seen from Figure 5 of the drawings how the upper surface 66 of the peripheral flange 42 of the insert 24 is slightly chamfered and this serves to centralise insert 24 within the neck 60 of the pressure vessel 20 during the manufacturing process.

Referring briefly to Figures 5A, 5B, insert 24 comprises a neck portion 68 (present also in Figure 5 but not referenced) around the exterior surface of which is provided a bead 70 in which are provided, by machining, forming or by some other process, a series of flats 72 to render the bead rotationally asymmetric, as compared to other parts thereof, e.g. flanges 42, 64. The rotationally asymmetric bead 70 thus provides a means whereby a hot thermoplastic polymer material, such as may be used in the blow-moulding of the pressure vessel, can flow around the bead and into the flats provided therein. Under suitable pressure, and after the moulded polymer material has cooled or at least partially set, not only will the exterior surface of neck 68 and the material of the pressure vessel be sealingly united to one another, but un-flattened portions of the bead 70 will be effectively embedded within the set polymer material to a greater extent than the flats, and by so being, they provide an exceptionally strong mechanical connection therewith, said connection being one which effectively completely prevents the insert from ever rotating within the aperture of the pressure vessel in which it is seated (except upon catastrophic failure of either insert or pressure vessel in the region of the connection).

It is to be specifically noted also from Figures 5, 5A, 5B that the flange 42 is large in diameter than the flange portion 64, these being the respective parts of the insert 24 between which the neck 60 of the pressure vessel is disposed, ideally having by being formed therebetween as part of the blow moulding process. This diametric differential is mechanically important as it further improves the axial strength of the connection between insert and pressure vessel such that, except in catastrophic circumstances, it is effectively impossible for the insert to escape from the inlet/outlet aperture of the pressure vessel, for example by bursting or blowing out. Indeed, in test conditions, it has been shown that this connection is so mechanically strong that the entire pressure vessel would fail first, e.g. by bursting, before the connection between insert and pressure vessel would fail. Furthermore, the flanges 42, 64 effectively axially restrict the flow of plastically fluent polymer material during the forming process, and thus effectively define the ultimate axial dimensions of the neck 60 of the pressure vessel which is received therebetween. Thus, the flanges 42, 64 and their particular configuration can be considered as important aspects of the present invention.

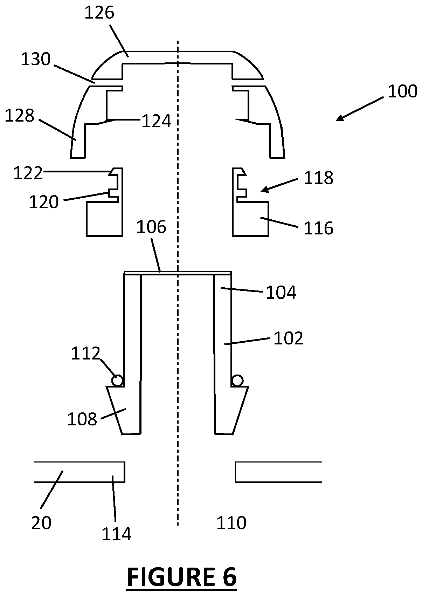

It will be appreciated that the pressure vessel 20 will require a pressure relief valve to safeguard against a risk of explosion, and a pressure relief valve suitable for use in conjunction with a container according to this invention is shown in Figures 6, 7 and 8 of the drawings.

Referring first of all to Figure 6, which is a schematic, exploded cross-sectional view of a pressure relief valve 100 in accordance with the invention, comprises a generally tubular main body portion 102 whose upper edge 104 is sealed shut by a thin, frangible membrane 106 and whose lower end terminates in a barb-like flange portion 108 that can be tapped through a suitably sized hole 110 in a wall of a pressure vessel 20.

An O-ring seal 112 is located on top of the barb portion 108 such that once the main body portion 102 has been inserted through the hole 110, it can be raised such that the O-ring seal 112 seats correctly, and is trapped between the upper part of the barb portion 108 and the underside 114 of the sidewall of the pressure vessel 20.

A screw threaded locking ring 116 is then screwed onto the outside of the main body portion 102 to clamp the periphery of the hole 110 in the pressure vessel 120 between the barb portion 108 and the locking ring 116.

The locking ring 116 comprises a stepped upper portion 118, which comprises two axially spaced apart edges 120, 122 that are adapted to engage an internal barb ring 124 of a push-on cover 126 of the valve 100.

The push-on cover 126 is manufactured from a single piece of injection moulded plastics material, such as polyethylene, and has a lower skirt portion 128 that covers the locking ring portion 116 thereby preventing tampering with the locking ring 116 after installation.

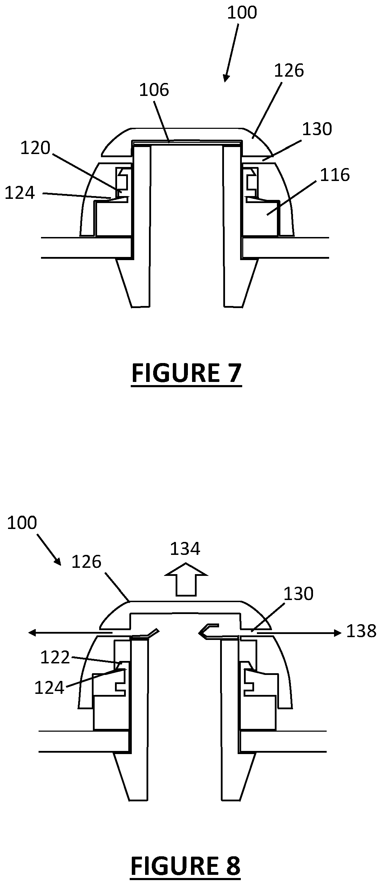

The cover portion 126 also comprises a number of vent apertures 130 which, when the cover portion 126 is pushed onto the locking ring, as shown in Figure 7, lie at a level below the frangible membrane 106.

Referring to Figure 7 of the drawings, which shows the valve *in-situ* in normal use: the cover portion 126 protects the frangible membrane 106 from damage, as well as preventing tampering of the locking ring 116 and providing a visual indication that everything is in order. However, in the event of an over-pressure situation, as shown in Figure 8, the hydrostatic pressure 132 within the pressure vessel 20 will exceed a predetermined rupture pressure of the frangible membrane 106 causing it to break, as shown in Figure 8. The fluid within the pressure vessel 20 will thus exert an upward force 134 on the cover portion 126 causing it to rise as shown in Figure 8, thus exposing the vent apertures 130 and permitting the fluid to escape as shown by arrows 138, thereby relieving the pressure within the pressure vessel 20. It will be noted, from Figure 8, that the barb ring 124 of the cover portion 126 have disengaged from the lower edge 120 and has now engaged against the upper ledge 122 of the locking ring 116.

In certain embodiments of the invention, the locking ring 116 is manufactured from an anodised metal ring, for example being coloured red, such that once the cover portion 126 has popped-up during a pressure relief event, it will become apparent to an observer that something is amiss because the red locking ring 116 will be visible from outside the valve 100. It will also be noted from Figure 8 of the drawings, in particular, that the escaping fluid 138 is directed sideward from the pressure relief valve 100 and that the cover portion 126 prevents it from blowing straight up, which might otherwise injure bystanders.

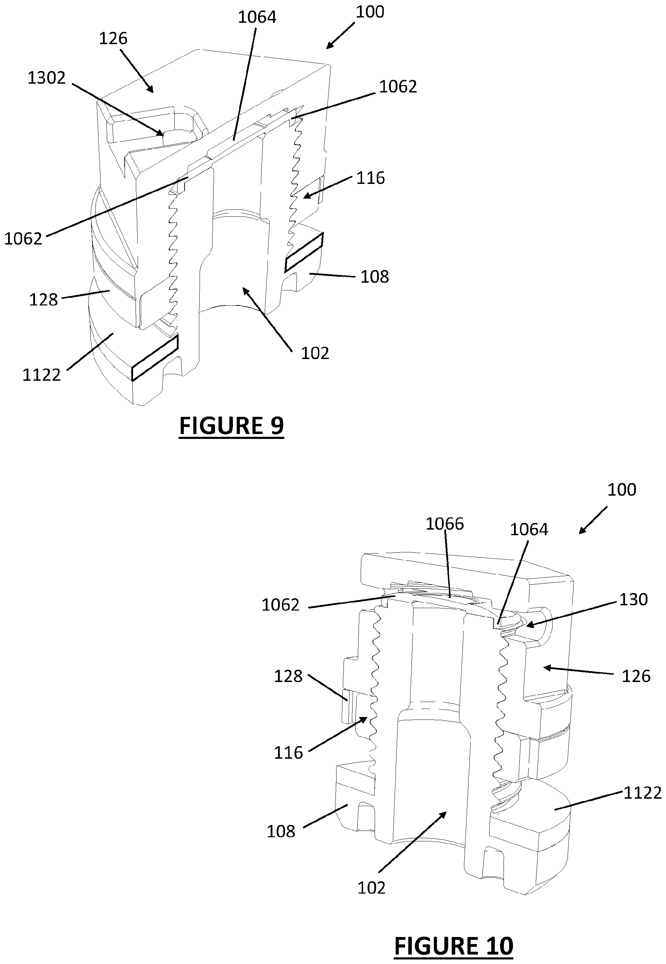

Embodiments of the pressure relief valve are shown in Figures 9 and 10 of the drawings, in which identical or equivalent features to those described in Figures 6, 7 and 8 above are identified with identical reference signs to avoid repetition. It can be seen from Figures 9 and 10 that the O-ring seal 112 has been replaced by a flat, annular seal 1122. Also, in Figure 10, the vent aperture 130 extends sidewardly through the cover portion 126, whereas in Figure 9, it 1302 extends through the side and top walls of the cover portion.

It can also be seen in Figures 9 and 10, that the frangible membrane 106 is formed as a plastics disc 1062 having an outer peripheral lip 1064 that seats in a rebate of the tubular main body portion 102. The disc 1062 has a central portion 1066 that is thinner than the periphery of the disc to form an area of weakness that ruptures preferentially in the event of an over-pressure situation.

The invention is not restricted to the details of the foregoing embodiments, which are merely exemplary of the invention which is defined in the appended claims.

## Claims

1. A container (10) comprising:
a plastics pressure vessel (20) defining a hollow interior volume (38) suitable, in use, for containing a quantity of a liquid, the pressure vessel comprising an inlet/outlet aperture (22) extending through a wall of, and being in fluid communication with the hollow interior of, the pressure vessel (20); and
an insert (24) manufactured from a different material to that of the pressure vessel (20) and being a plastics material of relatively higher density than the material from which the pressure vessel (20) is manufactured, wherein
the insert (24) is fused with a periphery of the inlet/outlet aperture (21) of the pressure vessel (20); **characterised in that** the insert (24) comprises a neck portion around the exterior surface of which is provided one or more rotationally asymmetric formations (72), said neck exterior surface forming a surface with which the periphery of the inlet/outlet aperture (22) of the pressure vessel (20) is sealingly united.

2. The container (10) of claim 1, wherein the pressure vessel (20) is manufactured from a material in the group consisting of: polypropylene, nylon, and any other recyclable or re-processable polymer.

3. The container (10) claim 1 or claim 2, wherein the insert (24) is manufactured from high-density polyethylene (HDPE).

4. The container (10) of any preceding claim, wherein the pressure vessel (20) and insert (24) are fused by any one or more of the group comprising: welding the insert (24) to the periphery of the inlet/outlet aperture (22); and as a result of the melding of the materials from which they are constituted.

5. The container (10) of any preceding claim, wherein the insert (24) is generally tubular and comprises a first flange portion (42, 66) whose outer diameter is greater than the diameter of the inlet/outlet aperture (22), the neck portion of the insert (24) extending upwardly from the first flange portion (42, 66) which is provided at one end of said neck portion, and a second flange portion (62) provided around said neck portion at some axial position remote from the first flange portion (42, 66), the diameter of said first flange portion being greater than the diameter of said second flange portion (62), and wherein the periphery of the inlet/outlet aperture (22) comprises a recess adapted to receive the first flange portion (42, 66) of the insert (24).

6. The container (10) of any preceding claim, further comprising an outer casing (12), the outer casing surrounding the plastics pressure vessel (10) and comprising a base portion (14), a generally tubular central waistband portion (16) and an upper portion (18).

7. The container (10) of claim 6, wherein the upper portion (18) comprises a lower peripheral edge comprising a circumferential lip (52) that seats within a corresponding circumferential channel (54) disposed on an upper edge of the waistband portion (16), or vice-versa and/or wherein the lower portion (14) comprises an upper peripheral edge comprising a circumferential lip that seats within a corresponding circumferential channel disposed on a lower edge of the waistband portion, or vice-versa.

8. The container (10) of claim 7, wherein the circumferential lip (52) comprises a clip formation (56) that positively engages a corresponding formation of the circumferential channel (54), and wherein the circumferential lip (52) is optionally ultrasonically welded to the circumferential channel (54).

9. The container (10) of any of claims 6, 7 or 8, wherein any one of the upper (10), lower (14) or waistband (16) portions comprises a radially outwardly disposed lip portion (56) which overlaps the join line between the lower portion (14) and the waistband portion (16); or the upper portion (18) and the waistband portion (16), the lip portion optionally forming a circumferential rib (36) extending around the outer casing (12).

10. The container (10) of any of claims 6 to 9, wherein the outer casing (12) comprises any one or more of the group comprising: a base portion (14) adapted, in use, to stabilise the container (10) when it is stood upright; an upper portion (34) adapted, in use, to facilitate manual handling of the container (10), and/or to protect the inlet/outlet aperture (22) and the external part of an attached spear, wherein the upper portion (18) comprising handle portions (28).

11. The container (10) of any preceding claim, further comprising a pressure relief valve (100), the pressure-relief valve (100) comprising: a tubular main body portion (102) adapted, in use, to sealingly affix to, and extend through, a wall of the plastics pressure vessel, a frangible membrane (106) sealingly closing an end of the tubular main body portion (102), and a cover portion (126) overlying the frangible membrane (106), the cover portion (126) comprising at least one vent aperture (130).

12. The container (10) of claim 11, wherein the cover portion (126) is slidingly affixed to the main body portion (102) and is moveable between a first position in which the vent aperture (130) is closed by the main body portion (102), and a second position in which the vent aperture (130) forms a conduit providing fluid communication between the frangible membrane (106) and the exterior of the cover portion (126).

13. The container (10) of claim 11 or claim 12, wherein the main body portion (102) comprises a barbed flange portion (108) that can be push-fitted into a suitably sized through hole (110) in a wall (114) of the pressure vessel (20) and a locking ring (118) screwed onto the outside of the main body portion (102) to clamp the periphery of the hole (110) of the pressure vessel (20) between the barbed flange (108) and the locking ring (118), and wherein the cover portion (126) optionally comprises a skirt portion (128) that overlies the locking ring (118) when the cover portion (128) is in the said first position.

14. The container (10) of any preceding claim, wherein the insert (24) is formed as a generally tubular plastics component, which comprises an internal thread (40) around its upper periphery, which is designed to engage with a complementary external screw thread of a dispensing spear.

15. The container (10) of any preceding claim being a beer keg.

## Patentansprüche

1. Behälter (10), der Folgendes umfasst:
einen Kunststoffdruckbehälter (20), der ein hohles Innenvolumen (38) definiert, das bei Gebrauch zur Aufnahme einer Flüssigkeitsmenge geeignet ist, wobei der Druckbehälter eine Ein-/Auslassöffnung (22) aufweist, die sich durch eine Wand des Druckbehälters (20) erstreckt und in Fluidverbindung mit dessen hohlem Inneren ist; und
einen Einsatz (24), der aus einem anderen Material als dem des Druckbehälters (20) hergestellt ist, das ein Kunststoffmaterial mit einer relativ höheren Dichte als das Material ist, aus dem der Druckbehälter (20) hergestellt ist, wobei
der Einsatz (24) mit einer Peripherie der Ein-/Auslassöffnung (21) des Druckbehälters (20) verschmolzen ist; **dadurch gekennzeichnet, dass**:
der Einsatz (24) einen Halsabschnitt aufweist, um dessen Außenfläche eine oder mehrere rotationsasymmetrische Formationen (72) vorgesehen sind, wobei die genannte Halsaußenfläche eine Fläche bildet, mit der die Peripherie der Ein-/Auslassöffnung (22) des Druckbehälters (20) dichtend verbunden ist.

2. Behälter (10) nach Anspruch 1, wobei der Druckbehälter (20) aus einem Material der Gruppe bestehend aus Polypropylen, Nylon und einem beliebigen anderen wiederverwertbaren oder wiederbearbeitbaren Polymer hergestellt ist.

3. Behälter (10) nach Anspruch 1 oder Anspruch 2, wobei der Einsatz (24) aus hochdichtem Polyethylen (HDPE) hergestellt ist.

4. Behälter (10) nach einem vorherigen Anspruch, wobei der Druckbehälter (20) und der Einsatz (24) durch eines oder mehrere aus der Gruppe bestehend aus Verschweißen des Einsatzes (24) mit der Peripherie der Ein-/Auslassöffnung (22) und infolge des Vereinigens der sie bildenden Materialien verschmolzen sind.

5. Behälter (10) nach einem vorherigen Anspruch, wobei der Einsatz (24) allgemein röhrenförmig ist und Folgendes aufweist: einen ersten Flanschabschnitt (42, 66), dessen Außendurchmesser größer ist als der Durchmesser der Ein-/Auslassöffnung (22), wobei sich der Halsabschnitt des Einsatzes (24) von dem ersten Flanschabschnitt (42, 66), der an einem Ende des genannten Halsabschnitts vorgesehen ist, nach oben erstreckt, und einen zweiten Flanschabschnitt (62), der um den genannten Halsabschnitt herum an einer axialen Position fern vom ersten Flanschabschnitt (42, 66) vorgesehen ist, wobei der Durchmesser des genannten ersten Flanschabschnitts größer ist als der Durchmesser des genannten zweiten Flanschabschnitts (62), und wobei die Peripherie der Ein-/Auslassöffnung (22) eine Aussparung umfasst, die zur Aufnahme des ersten Flanschabschnitts (42, 66) des Einsatzes (24) vorgesehen ist.

6. Behälter (10) nach einem vorherigen Anspruch, der ferner ein Außengehäuse (12) umfasst, wobei das Außengehäuse den Kunststoffdruckbehälter (10) umgibt und einen Basisabschnitt (14), einen allgemein röhrenförmigen mittleren Taillenabschnitt (16) und einen oberen Abschnitt (18) umfasst.

7. Behälter (10) nach Anspruch 6, wobei der obere Abschnitt (18) eine untere Peripheriekante umfasst, die eine Umfangslippe (52) umfasst, die in einem entsprechenden Umfangskanal (54) sitzt, der auf einer oberen Kante des Taillenabschnitts (16) angeordnet ist, oder umgekehrt, und/oder wobei der untere Abschnitt (14) eine obere Peripheriekante umfasst, die eine Umfangslippe umfasst, die in einem entsprechenden Umfangskanal sitzt, der auf einer unteren Kante des Taillenabschnitts angeordnet ist, oder umgekehrt.

8. Behälter (10) nach Anspruch 7, wobei die Umfangslippe (52) eine Klammerformation (56) umfasst, die formschlüssig in eine entsprechende Formation des Umfangskanals (54) eingreift, und wobei die Umfangslippe (52) optional mit dem Umfangskanal (54) ultraschallverschweißt ist.

9. Behälter (10) nach Anspruch 6, 7 oder 8, wobei ein beliebiger aus oberem (10), unterem (14) oder Taillenabschnitt (16) einen radial auswärts angeordneten Lippenabschnitt (56) umfasst, der die Verbindungslinie zwischen dem unteren Abschnitt (14) und dem Taillenabschnitt (16) oder dem oberen Abschnitt (18) und dem Taillenabschnitt (16) überlappt, wobei der Lippenabschnitt optional eine Umfangsrippe (36) bildet, die sich um das Außengehäuse (12) herum erstreckt.

10. Behälter (10) nach einem der Ansprüche 6 bis 9, wobei das Außengehäuse (12) eines oder mehrere aus der Gruppe bestehend aus Folgendem umfasst: einen Basisabschnitt (14), so ausgelegt, dass er bei Gebrauch den Behälter (10) stabilisiert, wenn er aufrecht steht; einen oberen Abschnitt (34), so ausgelegt, dass er bei Gebrauch die manuelle Handhabung des Behälters (10) erleichtert und/oder die Ein-/Auslassöffnung (22) und den äußeren Teil einer angebrachten Stange schützt, wobei der obere Abschnitt (18) Griffabschnitte (28) aufweist.

11. Behälter (10) nach einem vorherigen Anspruch, der ferner ein Druckentlastungsventil (100) umfasst, wobei das Druckentlastungsventil (100) Folgendes aufweist: einen röhrenförmigen Hauptkörperabschnitt (102), so ausgelegt, dass er sich bei Gebrauch dichtend an eine Wand des Kunststoffdruckbehälters anfügt und sich dadurch erstreckt, eine zerbrechliche Membran (106), die ein Ende des röhrenförmigen Hauptkörperabschnitts (102) dichtend verschließt, und einen Abdeckabschnitt (126), der über der zerbrechlichen Membran (106) liegt, wobei der Abdeckabschnitt (126) wenigstens eine Lüftungsöffnung (130) aufweist.

12. Behälter (10) nach Anspruch 11, wobei der Abdeckabschnitt (126) verschiebbar am Hauptkörperabschnitt (102) befestigt ist und zwischen einer ersten Position, in der die Lüftungsöffnung (130) durch den Hauptkörperabschnitt (102) geschlossen ist, und einer zweiten Position beweglich ist, in der die Lüftungsöffnung (130) einen Leitungskanal bildet, der eine Fluidverbindung zwischen der zerbrechlichen Membran (106) und der Außenseite des Abdeckungsabschnitts (126) bereitstellt.

13. Behälter (10) nach Anspruch 11 oder Anspruch 12, wobei der Hauptkörperabschnitt (102) Folgendes umfasst: einen Widerhakenflanschabschnitt (108), der in ein geeignet bemessenes Durchgangsloch (110) in einer Wand (114) des Druckbehälters (20) eingeschoben werden kann, und einen Sicherungsring (118), der an der Außenseite des Hauptkörperabschnitts (102) angeschraubt ist, um die Peripherie des Lochs (110) des Druckbehälters (20) zwischen dem Widerhakenflansch (108) und dem Sicherungsring (118) einzuklemmen, und wobei der Abdeckabschnitt (126) optional einen Schürzenabschnitt (128) aufweist, der über dem Sicherungsring (118) liegt, wenn der Abdeckabschnitt (128) in der genannten ersten Position ist.

14. Behälter (10) nach einem vorherigen Anspruch, wobei der Einsatz (24) als eine allgemein röhrenförmige Kunststoffkomponente ausgebildet ist, die ein Innengewinde (40) um ihre obere Peripherie herum aufweist, das für den Eingriff mit einem komplementären Außenschraubgewinde einer Ausgabestange vorgesehen ist.

15. Behälter (10) nach einem vorherigen Anspruch, der ein Bierfass ist.

## Revendications

1. Conteneur (10) comprenant :
un récipient sous pression en plastique (20) définissant un volume intérieur creux (38) approprié, en utilisation, pour contenir une quantité d'un liquide, le récipient sous pression comprenant une ouverture d'entrée/sortie (22) s'étendant à travers une paroi, et étant en communication fluidique avec l'intérieur creux, du récipient sous pression (20) ; et
une pièce rapportée (24) fabriquée à partir d'un matériau différent de celui du récipient sous pression (20) et étant en une matière plastique à densité relativement plus élevée que le matériau à partir duquel le récipient sous pression (20) est fabriqué, dans lequel
la pièce rapportée (24) est fusionnée avec une périphérie de l'ouverture d'entrée/sortie (21) du récipient sous pression (20) ; **caractérisé en ce que** :
la pièce rapportée (24) comprend une portion col autour de la surface extérieure laquelle est pourvue d'une ou plusieurs formations asymétriques dans le plan rotationnel (72), ladite surface extérieure de col formant une surface avec laquelle la périphérie de l'ouverture d'entrée/sortie (22) du récipient sous pression (22) est réunie de manière étanchéisante.

2. Conteneur (10) de la revendication 1, dans lequel le récipient sous pression (20) est fabriqué à partir d'un matériau dans le groupe consistant en : polypropylène, nylon, et n'importe quel autre polymère recyclable ou apte à un re-traitement.

3. Conteneur (10) de la revendication 1 ou de la revendication 2, dans lequel la pièce rapportée (24) est fabriquée à partir de polyéthylène à haute densité (HDPE).

4. Conteneur (10) d'une quelconque revendication précédente, dans lequel le récipient sous pression (20) et la pièce rapportée (24) sont fusionnés grâce à une quelconque ou plus des opérations du groupe comprenant : le soudage de la pièce rapportée (24) sur la périphérie de l'ouverture d'entrée/sortie (22) ; et à la suite de la fusion des matériaux à partir desquels ils sont constitués.

5. Conteneur (10) d'une quelconque revendication précédente, dans lequel la pièce rapportée (24) est tubulaire de manière générale et comprend une première portion bride (42, 66) dont le diamètre externe est plus grand que le diamètre de l'ouverture d'entrée/sortie (22), la portion col de la pièce rapportée (24) s'étendant vers le haut à partir de la première portion bride (42, 66) qui est prévue à une extrémité de ladite portion col, et une deuxième portion bride (62) prévue autour de ladite portion col à une certaine position axiale éloignée de la première portion bride (42, 66), le diamètre de ladite première portion bride étant plus grand que le diamètre de ladite deuxième portion bride (62), et dans lequel la périphérie de l'ouverture d'entrée/sortie (22) comprend un évidement conçu pour recevoir la première portion bride (42, 66) de la pièce rapportée (24).

6. Conteneur (10) d'une quelconque revendication précédente, comprenant en outre une enveloppe externe (12), l'enveloppe externe entourant le récipient sous pression plastique (10) et comprenant une portion base (14), une portion ceinture centrale tubulaire de manière générale (16) et une portion supérieure (18).

7. Conteneur (10) de la revendication 6, dans lequel la portion supérieure (18) comprend un bord périphérique inférieur comprenant une lèvre circonférentielle (52) qui se loge au sein d'un canal circonférentiel correspondant (54) disposé sur un bord supérieur de la portion ceinture (16), ou vice-versa et/ou dans lequel la portion inférieure (14) comprend un bord périphérique supérieur comprenant une lèvre circonférentielle qui se loge au sein d'un canal circonférentiel correspondant disposé sur un bord inférieur de la portion ceinture, ou vice-versa.

8. Conteneur (10) de la revendication 7, dans lequel la lèvre circonférentielle (52) comprend une formation à clip (56) qui se solidarise de manière positive avec une formation correspondante du canal circonférentiel (54), et dans lequel la lèvre circonférentielle (52) est facultativement soudée par ultra-sons au canal circonférentiel (54).

9. Conteneur (10) de l'une quelconque des revendications 6, 7 ou 8, dans lequel l'une quelconque des portions supérieure (10), inférieure (14) ou en ceinture (16) comprend une portion lèvre disposée radialement vers l'extérieur (56) qui chevauche la ligne de jonction entre la portion inférieure (14) et la portion ceinture (16) ; ou la portion supérieure (18) et la portion ceinture (16), la portion lèvre formant facultativement une nervure circonférentielle (36) laquelle s'étend autour de l'enveloppe externe (12).

10. Conteneur (10) de l'une quelconque des revendications 6 à 9, dans lequel l'enveloppe externe (12) comprend une quelconque ou plus de portions du groupe comprenant : une portion base (14) conçue, en utilisation, pour stabiliser le conteneur (10) lorsqu'il est mis debout ; une portion supérieure (34) conçue, en utilisation, pour faciliter la manipulation manuelle du conteneur (10), et/ou pour protéger l'ouverture d'entrée/sortie (22) et la partie externe d'une lance attachée, dans lequel la portion supérieure (18) comprend des portions poignée (28).

11. Conteneur (10) d'une quelconque revendication précédente, comprenant en outre une soupape de détente de pression (100), la soupape de détente de pression (100) comprenant : une portion corps central tubulaire (102) conçue, en utilisation, pour assurer la fixation de manière étanchéisante à, et l'extension à travers, une paroi du récipient sous pression plastique, une membrane frangible (106) fermant de manière étanchéisante une extrémité de la portion corps principal tubulaire (102), et une portion capot (126) recouvrant la membrane frangible (106), la portion capot (126) comprenant au moins une ouverture d'évent (130).

12. Conteneur (10) de la revendication 11, dans lequel la portion capot (126) est fixée de manière coulissante à la portion corps principal (102) et est apte à être déplacée entre une première position dans laquelle l'ouverture d'évent (130) est fermée par la portion corps principal (102), et une deuxième position dans laquelle l'ouverture d'évent (130) forme un conduit lequel procure une communication fluidique entre la membrane frangible (106) et l'extérieur de la portion capot (126).

13. Conteneur (10) de la revendication 11 ou de la revendication 12, dans lequel la portion corps principal (102) comprend une portion bride à barbes (108) qui peut être montée par ajustement à poussée dans un trou traversant dimensionné de manière appropriée (110) dans une paroi (114) du récipient sous pression (20) et une bague de verrouillage (118) vissée sur la face extérieure de la portion corps principal (102) afin de serrer la périphérie du trou (110) du récipient sous pression (20) entre la bride à barbes (108) et la bague de verrouillage (118), et dans lequel la portion capot (126) comprend facultativement une portion jupe (128) qui recouvre la bague de verrouillage (118) lorsque la portion capot (128) se trouve dans ladite première position.

14. Conteneur (10) d'une quelconque revendication précédente, dans lequel la pièce rapportée (24) est formée en tant que composant plastique tubulaire de manière générale, qui comprend un filetage interne (40) autour de sa périphérie supérieure, qui est conçu pour se solidariser avec un filetage à vis externe complémentaire d'une lance de distribution.

15. Conteneur (10) d'une quelconque revendication précédente étant un fût de bière.
